(19) **Europäisches Patentamt**

**European Patent Office**

**Office européen des brevets**

(11) **EP 1 291 497 B1**

(12) **FASCICULE DE BREVET EUROPEEN**

(45) Date de publication et mention
de la délivrance du brevet:
**23.08.2006 Bulletin 2006/34**

(51) Int Cl.:
*F01N 3/05* (2006.01)          *F01N 3/08* (2006.01)

(21) Numéro de dépôt: **02292093.8**

(22) Date de dépôt: **23.08.2002**

(54) **Ligne d'échappement d'un véhicule automobile et échangeur de chaleur utilisé sur la ligne d'échappement**

Abgasleitung eines Kraftfahrzeuges und in einer Abgasleitung benutzter Wärmetauscher

Motor vehicle exhaust line and heat exchanger used in the exhaust line

(84) Etats contractants désignés:
**AT BE BG CH CY CZ DE DK EE ES FI FR GB GR IE IT LI LU MC NL PT SE SK TR**

(30) Priorité: **05.09.2001 FR 0111492**

(43) Date de publication de la demande:
**12.03.2003 Bulletin 2003/11**

(73) Titulaire: **Peugeot Citroen Automobiles SA 92200 Neuilly sur Seine (FR)**

(72) Inventeur: **Magdelaine, Sylvain 92400 Courbevoie (FR)**

(74) Mandataire: **Bouget, Lucien et al Cabinet Lavoix 2, Place d'Estienne d'Orves 75441 Paris Cédex 09 (FR)**

(56) Documents cités:
**WO-A-00/34631          WO-A-99/35379**
**DE-A- 2 240 681          DE-A- 4 127 634**
**FR-A- 783 570            US-A- 3 050 935**
**US-A- 3 747 346**

- **PATENT ABSTRACTS OF JAPAN vol. 012, no. 004 (M-657), 8 janvier 1988 (1988-01-08) -& JP 62 168916 A (DAIDO STEEL CO LTD), 25 juillet 1987 (1987-07-25)**
- **PATENT ABSTRACTS OF JAPAN vol. 004, no. 072 (M-013), 27 mai 1980 (1980-05-27) -& JP 55 035176 A (NIPPON SOKEN INC;OTHERS: 01), 12 mars 1980 (1980-03-12)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

L'invention concerne une ligne d'échappement d'un moteur thermique d'un véhicule automobile comportant un dispositif de dépollution et notamment un piège à oxyde d'azote ainsi qu'un échangeur de chaleur utilisé sur la ligne d'échappement.

Les lignes d'échappement des moteurs de véhicule automobile comportent le plus souvent des dispositifs de dépollution qui sont utilisés pour éliminer les polluants présents dans les gaz d'échappement à la sortie des cylindres du moteur.

En particulier, les moteurs à injection directe, qu'ils soient à allumage par compression (moteurs diesel) ou à allumage commandé (moteurs à essence) nécessitent l'utilisation, sur leur ligne d'échappement, de pièges pour les oxydes d'azote, appelés pièges à NOx. De tels pièges à NOx comportent un matériau catalyseur qui ne fonctionne, de manière satisfaisante, que dans un intervalle de températures (généralement entre 250°C et 500°C).

Il est donc nécessaire que les gaz d'échappement pénètrent dans le piège à NOx à une température comprise dans l'intervalle de fonctionnement du catalyseur.

Pendant certaines phases de fonctionnement du véhicule automobile, et en particulier dans les phases de démarrage du moteur, les gaz d'échappement sont à une température généralement inférieure à la température minimale d'amorçage du catalyseur.

Il est nécessaire de réduire le plus possible la durée des phases pendant lesquelles les gaz d'échappement sont à une température qui se trouve en dehors de la plage de fonctionnement du catalyseur du piège à NOx. Il est donc nécessaire, par exemple dans les phases de démarrage du véhicule automobile, de faire traverser le piège à NOx par des gaz qui ont été peu refroidis entre leur sortie par la tubulure d'échappement des cylindres du moteur et leur arrivée dans le piège à NOx. Il est donc nécessaire de placer le piège à NOx le plus près possible de la sortie des gaz d'échappement par les tubulures du moteur.

En outre, il est nécessaire également que les gaz d'échappement qui traversent le piège à NOx soient constamment à une température inférieure à la limite de fonctionnement du piège. Au-delà de cette limite supérieure (par exemple 500°C), le catalyseur peut être fortement détérioré par les gaz d'échappement. Pour satisfaire à cette exigence, il est donc nécessaire d'éloigner le piège à NOx des tubulures d'échappement du moteur.

Il n'est donc pas possible de satisfaire aux deux conditions rappelées ci-dessus uniquement par un positionnement judicieux du piège à NOx le long de la ligne d'échappement.

On a donc proposé différents dispositifs ou procédés pour contrôler la température des gaz d'échappement avant leur entrée dans un dispositif de dépollution tel qu'un piège à NOx placé sur une ligne d'échappement du véhicule automobile.

Ces dispositifs peuvent être constitués par exemple par des moyens de dérivation des gaz d'échappement vers une voie ou une autre d'un système d'échange thermique permettant, respectivement, de refroidir les gaz de manière intense ou, au contraire, de les refroidir faiblement ou de les maintenir pratiquement à la température de sortie des tubulures du moteur.

De tels dispositifs qui comportent un aiguillage peuvent être relativement complexes et coûteux.

On connaît également des dispositifs de refroidissement de gaz circulant dans une ligne d'échappement, par une circulation d'air au contact d'une partie de la ligne d'échappement. Ces dispositifs doivent comporter des moyens appropriés de mise en circulation et de réglage du débit d'air de refroidissement.

En outre, ces dispositifs ont un rendement faible du fait que la surface d'échange thermique des gaz d'échappement est limitée à la paroi d'un conduit d'échappement.

On connaît dans chacun des documents DE-A-2240681, US-A-3 747 346 et DE-A-4127634, une ligne d'échappement d'un moteur thermique d'un véhicule automobile reliée, à l'une de ses extrémités à au moins une tubulure d'échappement du moteur et comportant successivement, dans le sens de circulation des gaz d'échappement provenant du moteur, un moyen d'échange de chaleur entre les gaz d'échappement et de l'air atmosphérique, relié à la tubulure d'échappement du moteur et un dispositif de dépollution relié directement au moyen d'échange thermique, notamment un piège à oxyde d'azote.

Le moyen d'échange de chaleur est un échangeur de chaleur comportant une paroi externe ayant une partie fixe délimitant une ouverture mettant en communication avec le milieu extérieur l'intérieur de la paroi de l'échangeur de chaleur renfermant des éléments d'échange de chaleur pour la canalisation des gaz d'échappement, et une partie mobile reliée à la partie fixe et mobile entre une position de fermeture de l'ouverture de la paroi et au moins une position d'ouverture, en fonction de la température des gaz d'échappement du moteur circulant dans les éléments d'échange de chaleur disposés à l'intérieur de la paroi de l'échangeur de chaleur.

Le but de l'invention est donc de proposer une ligne d'échappement d'un moteur thermique d'un véhicule automobile reliée, à l'une de ses extrémités à au moins une tubulure d'échappement du moteur et comportant successivement, dans le sens de circulation des gaz d'échappement provenant du moteur, un moyen d'échange de chaleur entre les gaz d'échappement et de l'air atmosphérique dont la capacité d'échange thermique est croissante avec la température des gaz d'échappement, relié à la tubulure d'échappement du moteur et un dispositif de dépollution relié directement au moyen d'échange de chaleur, notamment un piège à oxyde d'azote, réalisée de telle manière que le dispositif de dépollution fonctionne constamment à une température satisfaisante, sans utiliser de dispositif d'aiguillage des gaz d'échappement et de moyen de mise en circulation d'air.

Le moyen d'échange de chaleur est un échangeur de chaleur comportant une paroi externe ayant une partie fixe délimitant une ouverture mettant en communication avec l'air atmosphérique l'intérieur de la paroi de l'échangeur de chaleur renfermant des élément d'échange de chaleur pour la canalisation des gaz d'échappement, et une partie mobile reliée à la partie fixe et mobile entre une position de fermeture de l'ouverture de la paroi et au moins une position d'ouverture, en fonction de la température des gaz d'échappement du moteur circulant dans les éléments d'échange de chaleur disposés à l'intérieur de la paroi de l'échangeur de chaleur.

Selon l'invention, la partie mobile est constituée par deux plaques métalliques rapportées et fixées en position superposée et présentant des coefficients de dilatation thermique différents, analogues à une bilame.

De préférence, les éléments d'échange de chaleur sont constitués par une pluralité de tubes disposés avec leurs axes parallèles et communiquant à leurs extrémités, respectivement, avec un collecteur d'entrée et avec un collecteur de sortie de gaz d'échappement

L'invention est également relative à un échangeur de chaleur dont la capacité d'échange thermique est rendue automatiquement croissante avec la température des gaz d'échappement et qui peut être utilisé sur une ligne d'échappement suivant l'invention.

Afin de bien faire comprendre l'invention, on va décrire à titre d'exemple, en se référant aux figures jointes en annexe, plusieurs modes de réalisation d'une ligne d'échappement suivant l'invention et un échangeur de chaleur suivant l'invention utilisé sur une telle ligne d'échappement.

La figure 1 est une vue schématique d'une ligne d'échappement selon l'invention placée sous le plancher du véhicule automobile.

La figure 2 est une vue schématique d'une ligne d'échappement suivant l'invention placée, au moins partiellement, dans le compartiment moteur à l'avant du moteur du véhicule automobile.

La figure 3 est une vue schématique montrant le principe de fonctionnement de l'échangeur thermique à capacité d'échange automatiquement variable avec la température des gaz, suivant l'invention.

La figure 4 est une vue en perspective d'une ligne d'échappement suivant l'invention disposée partiellement à l'avant du moteur.

La figure 5 est une vue en coupe de l'échangeur de chaleur de la ligne représentée sur la figure 4.

La figure 6 est une vue partielle agrandie en perspective de l'échangeur de chaleur de la ligne représentée sur la figure 4.

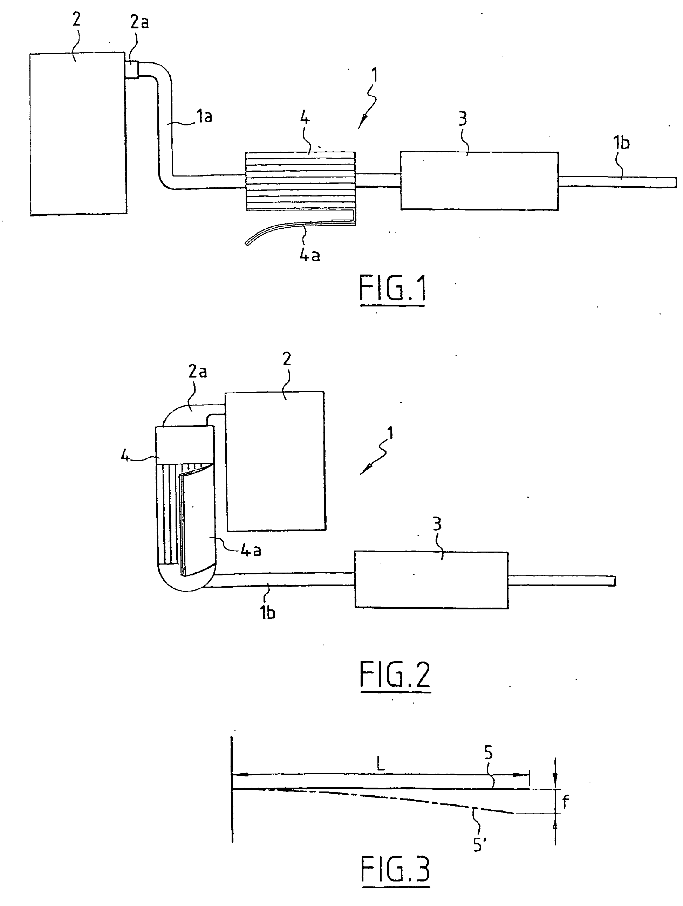

Sur la figure 1, on voit une ligne d'échappement désignée de manière générale par le repère 1, d'un moteur thermique 2 d'un véhicule automobile présentant une disposition générale horizontale à l'arrière du moteur 2.

La ligne d'échappement 1 est disposée généralement en-dessous du plancher et suivant la direction longitudinale du véhicule automobile. La ligne d'échappement 1 comporte en particulier une partie initiale 1a ou partie chaude reliée aux tubulures d'échappement 2a des cylindres du moteur 2 et recevant les gaz d'échappement à haute température sortant des cylindres du moteur 2. Sur une partie horizontale 1b de la ligne d'échappement est disposé un piège à oxyde d'azote ou piège à NOx 3 constitué par une enveloppe métallique reliée à la ligne d'échappement et qui renferme un élément de dépollution.

Le catalyseur du piège à NOx ne fonctionne de manière satisfaisante que lorsqu'il est en contact avec des gaz d'échappement dont la température est comprise entre 250°C et 500°C.

Selon l'invention, on dispose le piège à NOx 3 dans une partie de la ligne d'échappement proche de la partie initiale 1a recevant des gaz à haute température et on intercale un échangeur de chaleur 4 entre le piège à NOx 3 et la partie chaude initiale 1a de la ligne d'échappement. Comme il sera expliqué plus loin, l'échangeur de chaleur 4 qui est destiné à assurer un échange de chaleur entre les gaz d'échappement amenés à traverser l'échangeur et de l'air ambiant est un échangeur présentant une capacité d'échange thermique automatiquement variable en fonction de la température des gaz d'échappement parvenant à l'échangeur de chaleur, c'est-à-dire des gaz d'échappement provenant des cylindres du moteur 2 par l'intermédiaire des tubulures 2a et de la partie antérieure 1a de la ligne d'échappement. Pour cela, l'échangeur de chaleur 4 comporte un dispositif 4a de régulation automatique de la capacité d'échange thermique entre les gaz d'échappement et l'air ambiant.

Lorsque les gaz d'échappement sont à une température proche de la borne inférieure de l'intervalle de température de fonctionnement du catalyseur du piège à NOx, l'échangeur de chaleur ne produit pratiquement aucun refroidissement des gaz et assure uniquement leur transmission au piège à NOx 3 dans lequel les oxydes d'azote contenus par les gaz provenant du moteur 2 à injection directe sont éliminés, dès que la température des gaz et du piège à NOx a atteint ou dépassé la borne inférieure de l'intervalle de fonctionnement.

Au contraire, lorsque les gaz sont à une température proche de la borne supérieure de température acceptable des gaz d'échappement par le piège à NOx, l'échangeur de chaleur 4 assure la dissipation du surplus d'énergie thermique contenue par les gaz, de sorte que leur température soit maintenue en dessous de la borne supérieure de l'intervalle de fonctionnement du piège à NOx.

De cette manière, les gaz d'échappement introduits dans le piège à NOx sont maintenus à une température qui se situe pratiquement constamment à l'intérieur de l'intervalle de fonctionnement du piège à NOx.

La ligne d'échappement 1 peut comporter d'autres éléments placés en aval et en amont du piège à NOx 3 tels que des catalyseurs de divers types ou des silencieux.

Pour la mise en oeuvre de l'invention, le piège à NOx est placé le plus près possible de la sortie des gaz d'échappement du moteur, de manière à recevoir, dans les phases où les gaz d'échappement sont à une température peu élevée, des gaz peu refroidis et pratiquement à leur température de sortie de la tubulure d'échappement 2a.

Sur la figure 2, on a représenté une variante de réalisation de la ligne d'échappement 1, les éléments correspondants sur les figures 1 et 2 étant désignés par les mêmes repères.

La ligne d'échappement 1 est disposée au moins partiellement à l'intérieur du compartiment renfermant le moteur 2 du véhicule automobile dont les tubulures d'échappement 2a sont dirigées vers l'avant et reliées à l'échangeur de chaleur 4 comportant un dispositif 4a de réglage de sa capacité d'échange thermique en fonction de la température des gaz traversant l'échangeur.

Le piège à NOx 3 peut être placé sur une partie horizontale 1 b de la ligne d'échappement qui est disposée, soit à l'intérieur du compartiment moteur, soit en dessous du plancher du véhicule automobile.

Dans le cas de la ligne d'échappement représentée sur la figure 1, l'échangeur de chaleur présente des éléments d'échange et de circulation des gaz d'échappement ayant une disposition générale horizontale alors que dans le cas de la ligne d'échappement représentée sur la figure 2, les éléments de circulation des gaz d'échappement et d'échange thermique ont une disposition généralement verticale.

Le dispositif 4a assurant le réglage de la capacité d'échange thermique de l'échangeur 4 peut être constitué par deux plaques en des matériaux métalliques ayant des coefficients de dilatation thermique sensiblement différents fixées l'une sur l'autre, généralement dans une disposition plan sur plan, par des rivets, par des soudures ou par collage. Les deux plaques superposées constituant un dispositif analogue à une bilame sont placées de manière à constituer une partie mobile de la paroi extérieure de l'échangeur 4 qui renferme des éléments de guidage et d'échange thermique tels que des tubes d'échange dans lesquels les gaz sont amenés à circuler. La paroi extérieure de l'échangeur thermique 4 constitue un écran thermique isolant les tubes d'échange de l'air ambiant qui est amené à circuler au contact de la paroi externe de l'échangeur, en particulier pendant le roulage du véhicule automobile.

Lorsque les gaz sont à une température peu élevée, par exemple dans les phases de démarrage du moteur thermique du véhicule automobile, la partie de paroi mobile de l'échangeur de chaleur, constituée par les deux plaques superposées du dispositif de réglage 4a, est dans une disposition telle qu'elle referme totalement la paroi externe de l'échangeur thermique 4. Les tubes d'échange sont alors totalement isolés de l'air extérieur qui circule au contact de la paroi externe de l'échangeur de chaleur 4.

Lorsque la température des gaz d'échappement s'élève au-dessus de la température inférieure de seuil pour laquelle des plaques du dispositif 2a ferment complètement la paroi de l'échangeur de chaleur, les plaques du dispositif de réglage 2a qui sont fixées, suivant l'un de leurs bords, sur la partie fixe de la paroi de l'échangeur de chaleur se déforment par flexion, de telle sorte que le bord des plaques opposées au bord fixé sur la paroi de l'échangeur de chaleur s'écarte de cette paroi et ouvre un intervalle de passage d'air vers la partie interne de l'échangeur de chaleur renfermant les tubes d'échange, comme il est visible par exemple sur les figures 1 et 2 où l'élément de réglage 4a a été représenté dans une position déformée par flexion.

Sur la figure 3, on a représenté les plaques superposées du dispositif de réglage 4a de l'échangeur thermique 4, dans une première configuration 5, non déformée par flexion, à une première température, et dans une seconde configuration 5', déformée par flexion, à une seconde température supérieure à la première température, la longueur des plaques entre leur bord fixé sur la paroi de l'échangeur de chaleur et leur bord non fixé étant désignée par L et le déplacement du bord non fixé par f (ou flèche). En désignant par $\alpha$ le coefficient de flexion thermique spécifique des plaques ($\alpha$ de l'ordre de $14.10^{-6\circ}K^{-1}$) et par e l'épaisseur des deux plaques, on peut calculer la flèche f, ou flèche thermique caractérisant la déformation des plaques par dilatation différentielle par la formule :

$$f = \frac{\alpha.L^2.\Delta T}{e}.$$

Lorsque la température des gaz d'échappement du moteur augmente depuis une température peu élevée voisine de la borne inférieure de la plage de fonctionnement du catalyseur (par exemple 250°C), les plaques superposées 5 constituant le dispositif de réglage 4a de l'échangeur de chaleur en position non déformée assurent une fermeture complète de la paroi extérieure de l'échangeur de chaleur.

Lorsque la température des gaz d'échappement s'élève jusqu'à une température par exemple voisine de la borne supérieure de l'intervalle (par exemple 500°C), les tubes d'échange de l'échangeur thermique 4 assurent par rayonnement et convection le chauffage de la paroi externe de l'échangeur de chaleur et en particulier de la partie mobile 4a, de sorte que les plaques superposées 5 se déforment par flexion pour prendre une forme telle que 5' représentée sur la figure 3 et ouvrent ainsi un espace de passage d'air qui est guidé par les plaques 4a vers l'intérieur de l'échangeur de chaleur pour entrer en contact avec la surface d'échange des tubes d'échange thermique de l'échangeur de chaleur. Les gaz d'échappement sont alors refroidis de manière qu'ils pénètrent dans le piège à NOx 3 à une température inférieure à la température à laquelle le catalyseur du piège à NOx 3 risque d'être détérioré.

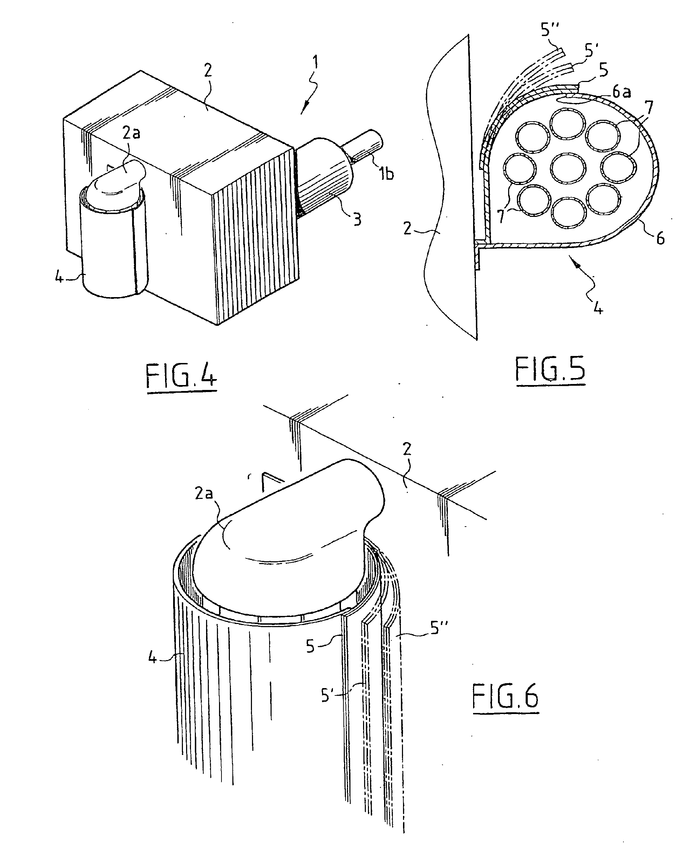

Sur les figures 4, 5 et 6, on a représenté, de manière plus détaillée, le second mode de réalisation de la ligne d'échappement représenté de manière schématique sur la figure 2.

La ligne d'échappement 1 est disposée principalement dans le compartiment moteur du véhicule automobile renfermant le moteur 2 dont la tubulure d'échappement 2a est reliée directement à la partie supérieure des tubes d'échange thermique de l'échangeur de chaleur 4 disposé en amont du piège à NOx 3 qui peut être placé également dans le compartiment moteur du véhicule automobile.

Comme il est visible en particulier sur la figure 5, l'échangeur de chaleur 4 comporte une enveloppe externe 6 de forme globalement cylindrique fixée contre le carter du moteur 2 dans une disposition à axe vertical et, par exemple, un ensemble de neuf tubes d'échange thermique 7 disposés avec leurs axes verticaux, c'est-à-dire parallèlement à l'axe de l'enveloppe 6, dans une disposition assurant un bon contact thermique de la surface extérieure d'échange des tubes 7 avec de l'air de refroidissement contenu ou circulant dans l'enveloppe externe 6 de l'échangeur de chaleur 4.

Les tubes 7 sont reliés, à leurs extrémités supérieures, à la tubulure supérieure 2a du moteur 2 constituant un collecteur d'entrée de l'échangeur de chaleur et, à leurs parties inférieures, à un collecteur de sortie relié à la partie 1b de la ligne d'échappement assurant la liaison directe de la sortie de l'échangeur de chaleur à l'entrée du piège à NOx 3.

L'enveloppe externe 6 comporte une partie fixe qui ne se referme pas complètement suivant la périphérie de l'échangeur de chaleur, une ouverture résiduelle 6a s'étendant sensiblement suivant toute la hauteur de la paroi de l'échangeur de chaleur et suivant une partie de la périphérie de la paroi externe.

Suivant un bord de l'ouverture 6a, est fixée une paroi de fermeture mobile 5 constituée par deux plaques à coefficients de dilatation thermique différents fixées l'une contre l'autre en position superposée. La paroi de fermeture mobile 5 peut être fixée sur la paroi 6, par exemple par soudure, rivetage ou collage.

La paroi 5 est conformée de telle manière qu'elle ferme entièrement l'ouverture 6a, lorsque sa température est inférieure à un seuil déterminé qui correspond à la température d'équilibre de la paroi avec les tubes 7, lorsque ceux-ci sont traversés par des gaz d'échappement à un seuil de température inférieur à la température maximale de fonctionnement du catalyseur du piège à NOx 3.

Lorsque la température des gaz d'échappement s'élève au-dessus du seuil de température, la température de la paroi de l'échangeur de chaleur 4 s'élève de manière telle que l'élément de paroi mobile 5 se déforme par flexion pour adopter successivement les positions 5' et 5", lorsque la température des gaz d'échappement devient proche de la température maximale que peut supporter le catalyseur du piège à NOx.

Le déplacement de la paroi 5 vers les positions 5' et 5" assure une circulation d'air de refroidissement à l'intérieur de la paroi 6 du filtre, pendant le roulage du véhicule automobile. Les gaz d'échappement circulant à l'intérieur des tubes d'échange thermique 7 sont refroidis par la circulation d'air au contact de leur surface extérieure. Cette circulation d'air est d'autant plus intense que la paroi 5 dégage un plus grand espace d'entrée de l'ouverture 6a. La circulation d'air est donc d'autant plus intense que la déformation par flexion de la paroi 5 est plus importante. Le refroidissement des gaz d'échappement par l'échangeur de chaleur 4 est donc d'autant intense que la température des gaz est plus élevée. Il se produit donc une autorégulation du fonctionnement de l'échangeur de chaleur 4 comportant le moyen de régulation 4a constitué par la double paroi 5.

Les gaz d'échappement ayant traversé l'échangeur de chaleur et entrant dans le piège à NOx 3 sont donc d'autant plus refroidis que les gaz d'échappement sortant du moteur sont à une température plus élevée.

L'échangeur de chaleur 4 est conçu de manière à éliminer le surplus d'énergie thermique contenue par les gaz d'échappement, pour maintenir leur température maximale à une valeur proche du seuil de fonctionnement supérieur du catalyseur du piège à NOx.

Le fonctionnement du dispositif suivant l'invention est totalement automatique et ne nécessite pas de réaliser l'aiguillage des gaz d'échappement vers des conduits présentant des caractéristiques d'échange thermique différentes.

Le dispositif suivant l'invention est donc simple et compact et peut être placé dans toute partie du véhicule automobile.

Le dispositif suivant l'invention permet un fonctionnement idéal du piège à NOx (ou de tout catalyseur de dépollution), quel que soit le mode de fonctionnement du moteur à combustion interne.

L'invention ne se limite pas au mode de réalisation qui a été décrit.

On peut imaginer d'utiliser un échangeur de chaleur dont le réglage de la capacité d'échange thermique en fonction de la température des gaz est réalisé d'une autre manière que celle qui a été décrite. L'échangeur de chaleur peut comporter des moyens de circulation naturelle d'air de refroidissement pendant le roulage du véhicule automobile ou encore des moyens de circulation d'air forcée qui dans ce cas peuvent être commandés en fonction de la température de sortie du moteur des gaz d'échappement.

L'échangeur de chaleur peut comporter, à la place de tubes d'échange thermique, tout autre élément d'échange thermique assurant la canalisation des gaz d'échappement et l'échange de chaleur avec l'air ambiant.

L'invention s'applique non seulement à une ligne d'échappement comportant un piège à NOx mais encore à toute ligne d'échappement com-portant un catalyseur de dépollution fonctionnant de manière idéale dans un intervalle de température défini.

L'invention s'applique à tout type de véhicule automobile comportant une ligne d'échappement sur laquelle est disposé au moins un catalyseur de dépollution.

## Revendications

1. Ligne d'échappement d'un moteur thermique (2) d'un véhicule automobile reliée, à l'une de ses extrémités, à au moins une tubulure d'échappement (2a) du moteur (2) et comportant, successivement, dans le sens de circulation des gaz d'échappement provenant du moteur, un moyen d'échange de chaleur (4) entre les gaz d'échappement et de l'air atmosphérique dont la capacité d'échange thermique est croissante avec la température des gaz d'échappement, relié à la tubulure d'échappement (2a) du moteur (2) et un dispositif de dépollution (3) relié directement au moyen d'échange thermique (4), notamment un piège à oxyde d'azote, le moyen d'échange de chaleur étant un échangeur de chaleur (4) comportant une paroi externe (6) ayant une partie fixe délimitant une ouverture (6a) mettant en communication avec l'air atmosphérique l'intérieur de la paroi (6) de l'échangeur de chaleur (4) renfermant des éléments d'échange de chaleur (7) pour la canalisation des gaz d'échappement, et une partie mobile (5) reliée à la partie fixe et mobile entre une position de fermeture de l'ouverture (6a) de la paroi (6) et au moins une position d'ouverture (5', 5"), en fonction de la température des gaz d'échappement du moteur circulant dans les éléments d'échange de chaleur (7) disposés à l'intérieur de la paroi (6) de l'échangeur de chaleur, **caractérisée par le fait que** la partie mobile (5) est constituée par deux plaques métalliques rapportées et fixées en position superposée et présentant des coefficients de dilatation thermique différents, analogues à une bilame.

2. - Ligne d'échappement suivant la revendication 1, **caractérisée par le fait que** les éléments d'échange de chaleur (7) sont constitués par une pluralité de tubes (7) disposés avec leurs axes parallèles et communiquant à leurs extrémités, respectivement, avec un collecteur d'entrée (2a) et avec un collecteur de sortie de gaz d'échappement.

3. - Ligne d'échappement suivant la revendication 1 ou 2, **caractérisée par le fait que** l'échangeur de chaleur (4) et le dispositif de dépollution (3) sont disposés sous le plancher du véhicule automobile.

4. - Ligne d'échappement suivant la revendication 1 ou 2, **caractérisée par le fait que** l'échangeur de chaleur (4) et le dispositif de dépollution (3) sont disposés dans un compartiment moteur renfermant le moteur (2) du véhicule automobile.

5. - Ligne d'échappement suivant l'une quelconque des revendications 1 à 4, **caractérisée par le fait que** le dispositif de dépollution est un piège à NOx.

6. - Echangeur de chaleur pour une ligne d'échappement selon l'une quelconque des revendications 1 à 5, **caractérisé par le fait qu'**il présente, pendant le roulage du véhicule automobile, une capacité d'échange thermique automatiquement croissante avec la température des gaz d'échappement.

## Claims

1. Exhaust system for an internal combustion engine (2) of an automotive vehicle, connected at one end to at least one exhaust manifold (2a) of the engine (2) and which includes, successively, in the direction of flow of exhaust gases emerging from the engine, a means of exchanging heat (4) between the exhaust gases and atmospheric air whose heat exchange capacity increases with the temperature of the exhaust gas, connected to the exhaust manifold (2a) of the engine (2) and a pollution control device (3) connected directly to the means of heat exchange (4), in particular a nitrogen oxide trap, with the means of heat exchange being a heat exchanger (4) which includes an external wall (6) which has a fixed part forming an opening (6a) connecting to the atmospheric air the interior of the wall (6) of the heat exchanger (4) enclosing the heat exchange elements (7) for channelling of exhaust gases, and a part (5) which can move connected to the fixed part and which can move between a position of closure of the opening (6a) in the wall (6) and at least one opening position (5', 5"), depending on the temperature of the exhaust gas from the engine flowing in the heat exchange elements (7) arranged inside the wall (6) of the heat exchanger, **characterised by** the fact that the part (5) which can move is made up of two added metal plates fixed in a superimposed position and which exhibit different coefficients of thermal expansion, analogous to a bimetal strip.

2. Exhaust system as described in claim 1, **characterised by** the fact that the heat exchange elements (7) are made up of multiple tubes (7) arranged with their axes parallel and which are connected, at their respective ends, to an exhaust gas inlet manifold (2a) and to an exhaust gas outlet manifold.

3. Exhaust system as described in claim 1 or 2, **characterised by** the fact that the heat exchanger (4) and the pollution control device (3) are arranged beneath the floor of the automotive vehicle.

4. Exhaust system as described in claim 1 or 2, **characterised by** the fact that the heat exchanger (4) and the pollution control device (3) are arranged in an engine compartment which contains the engine (2) of the automotive vehicle.

5. Exhaust system as described in any of claims 1 to 4, **characterised by** the fact that the pollution control device is a NOx trap.

6. Heat exchanger for an exhaust system as described in any of claims 1 to 5 whatsoever, **characterised by** the fact when the automotive vehicle is in motion, it possesses a heat exchange capacity which automatically increases with the temperature of the exhaust gases.

**Patentansprüche**

1. Abgasstrecke eines Verbrennungsmotors (2) eines Kraftfahrzeugs, die an einem ihrer Enden mit mindestens einem Auslassstutzen (2a) des Motors (2) verbunden ist und nacheinander in der Strömungsrichtung der vom Motor kommenden Abgase ein Wärmetauschmittel (4) zwischen den Abgasen und der atmosphärischen Luft, dessen Wärmetauschkapazität mit der Temperatur der Abgase ansteigt und das mit dem Auslassstutzen (2a) Motors (2) verbunden ist, und eine direkt mit dem Wärmetauschmittel (4) verbundene Abgasreinigungsvorrichtung (3), insbesondere eine Stickoxidfalle, umfasst, wobei das Wärmetauschmittel ein Wärmetauscher (4) ist, der eine Außenwand (6) umfasst, die einen feststehenden Teil, der eine Öffnung (6a) begrenzt, die das Innere der Wand (6) des Wärmetauschers (4), die Wärmetauschelemente (7) für die Durchleitung der Abgase einschließt, mit der atmosphärischen Luft verbindet, und einen beweglichen Teil (5) aufweist, der mit dem feststehenden Teil verbunden ist und zwischen einer Stellung der Schließung der Öffnung (6a) der Wand (6) und mindestens einer Öffnungsstellung (5', 5") beweglich ist, und zwar in Abhängigkeit von der Temperatur der Abgase des Motors, die in den innerhalb der Wand (6) des Wärmetauschers angeordneten Wärmetauschelementen (7) strömen, **dadurch gekennzeichnet, dass** der bewegliche Teil (5) aus zwei angebrachten und in überlagerter Stellung befestigten Metallplatten besteht, die verschiedene Wärmeausdehnungskoeffizienten aufweisen und einem Bimetallelement entsprechen.

2. Abgasstrecke nach Anspruch 1, **dadurch gekennzeichnet, dass** die Wärmetauschelemente (7) aus einer Vielzahl von Rohren (7) bestehen, die mit ihren Achsen parallel angeordnet sind und an ihren Enden mit einem Eintrittskollektor (2a) bzw. einem Austrittskollektor für Abgase verbunden sind.

3. Abgasstrecke nach Anspruch 1 oder 2, **dadurch gekennzeichnet, dass** der Wärmetauscher (4) und die Abgasreinigungsvorrichtung (3) unter dem Boden das Kraftfahrzeugs angeordnet sind.

4. Abgasstrecke nach Anspruch 1 oder 2, **dadurch gekennzeichnet, dass** der Wärmetauscher (4) und die Abgasreinigungsvorrichtung (3) in einem Motorabteil angeordnet sind, das den Motor (2) des Kraftfahrzeugs enthält.

5. Abgasstrecke nach einem der Ansprüche 1 bis 4, **dadurch gekennzeichnet, dass** die Abgasreinigungsvorrichtung eine NOx-Falle ist.

6. Wärmetauscher für eine Abgasstrecke nach einem der Ansprüche 1 bis 5, **dadurch gekennzeichnet, dass** er während des Fahrens des Kraftfahrzeugs eine automatisch mit der Temperatur der Abgase ansteigende Wärmetauschkapazität besitzt.

FIG.1

FIG.2

FIG.3

8

FIG.4

FIG.5

FIG.6